## Europäisches Patentamt
## European Patent Office
## Office européen des brevets

(19)

(11) Numéro de publication: **0 060 733**
**B1**

(12) # FASCICULE DE BREVET EUROPEEN

(45) Date de publication du fascicule du brevet:
31.07.85

(51) Int. Cl.⁴: **B 60 G 15/06**, B 62 D 7/08

(21) Numéro de dépôt: **82400005.3**

(22) Date de dépôt: **05.01.82**

(54) Train avant pour véhicule automobile.

(30) Priorité: **17.03.81 FR 8105313**

(43) Date de publication de la demande:
**22.09.82 Bulletin 82/38**

(45) Mention de la délivrance du brevet:
**31.07.85 Bulletin 85/31**

(84) Etats contractants désignés:
**DE GB IT**

(56) Documents cités:
**DE - A - 2 645 060**
**FR - A - 1 149 616**
**FR - A - 1 149 962**
**FR - A - 1 189 165**
**FR - A - 2 410 573**
**US - A - 3 075 600**

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor-Hugo, F-92200 Neuilly-sur-Seine (FR)**

(72) Inventeur: **Froumajou, Armand, Rue du Docteur Laennec, F-95520 Osny (FR)**

(74) Mandataire: **Polus, Camille et al, c/o Cabinet Lavoix 2, Place d'Estienne d'Orves, F-75441 Paris Cedex 09 (FR)**

BUNDESDRUCKEREI BERLIN

## Description

La présente invention se rapporte à un train avant de véhicule automobile destiné aux véhicules dans lesquels les organes transversaux de commande de direction, tels que crémaillère, sont disposés à un niveau relativement élevé.

Cette invention concerne plus particulièrement un train avant de véhicule automobile dans lequel chaque roue est associée à un élément porteur amortisseur constitué par un amortisseur hydraulique entouré d'un ressort hélicoïdal et la commande de direction est assurée par l'intermédiaire du cylindre d'amortisseur.

Dans un train avant de ce type et notamment dans ceux décrits dans les FR-A-1 149 616, 1 149 962 et 1 189 165, la tige de piston de l'amortisseur hydraulique est reliée à son extrémité supérieure à la caisse du véhicule, tandis que le cylindre est solidaire à sa partie inférieure de la fusée de roue. Le cylindre est en outre solidaire, d'une part d'une coupelle sur laquelle appuie la base du ressort hélicoïdal, et d'autre part d'un levier relié par une rotule à une biellette entraînée par le mécanisme de commande de direction, ce qui complique la réalisation de l'élément porteur amortisseur.

La présente invention a pour but de simplifier cet agencement en vue d'abaisser le prix de revient et le poids de l'ensemble.

Elle a pour objet un train avant de véhicule automobile comportant, pour chaque roue, une fusée solidaire d'un cylindre d'amortisseur hydraulique dont la tige de piston est reliée à son extrémité supérieure à la carosserie, un ressort hélicoïdal disposé autour de l'amortisseur, entre une coupelle supérieure reliée à la carrosserie et une coupelle inférieure solidaire du cylindre d'amortisseur, et une biellette de commande de direction reliée au cylindre d'amortisseur par une articulation à rotule, train dans lequel l'articulation à rotule est portée par la coupelle inférieure du ressort qui es solidaire du cylindre d'amortisseur.

Selon un mode de réalisation préféré, la coupelle inférieure du ressort est prolongée latéralement et porte l'articulation à rotule à son extrémité éloignée du cylindre.

La commande de direction s'effectue donc très simplement par l'intermédiaire de la coupelle inférieure du ressort, du cylindre et de la fusée de roue qui sont solidaires les uns des autres. Par contre, le cylindre ne porte qu'un seul organe qui sert à la fois de support au ressort et à la commande de direction.

La description ci-dessous d'un mode de réalisation donné d'exemple non limitatif et représenté au dessin annexé fera d'ailleurs ressortir les avantages et caractéristiques de l'invention. Sur ces dessins:

la Fig. 1 est une vue partielle en élévation, avec arrachement partiel, d'un demi-train avant suivant l'invention;

la Fig. 2 est une coupe suivant la ligne 2-2 de la Fig. 1;

la Fig. 3 est une coupe suivant la ligne 3-3 de la Fig. 2.

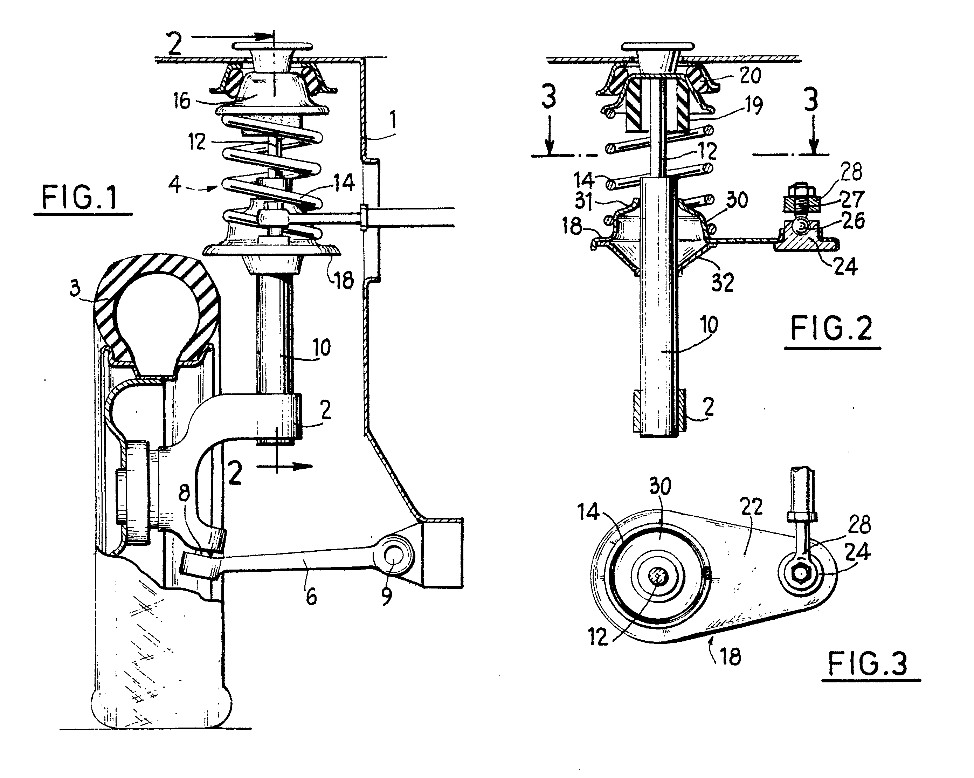

Comme le montre la Fig. 1, le train avant suivant l'invention comporte entre la carrosserie 1 du véhicule automobile et une fusée 2 de roue 3 d'une part un dispositif porteur amortisseur 4, et d'autre part un bras inférieur transversal 6.

Le bras transversal 6 est relié à la partie inférieure de la fusée 2 par une articulation à rotule 8 et à la carrosserie 1 par une articulation 9 d'axe sensiblement longitudinal.

Le dispositif porteur amortisseur 4 est monté à la partie supérieure de la fusée 2. Il comporte un amortisseur hydraulique dont le cylindre 10 est solidaire à sa partie inférieure de la fusée 2, tandis que la tige 12 de son piston est reliée à son extrémité supérieure à la carrosserie 1. Un ressort hélicoïdal 14 est disposé autour de l'amortisseur hydraulique 10 entre deux coupelles 16 et 18, respectivement supérieure et inférieure. La coupelle supérieure 16 est reliée à la carrosserie 1 par une butée 20 de type connu, autorisant un mouvement relatif de rotation entre la coupelle 16 et la carrosserie 1. En outre, à l'intérieur de cette coupelle 16 est fixée une butée de talonnage 19 coaxiale à la tige 12 et placée entre elle et le ressort 14.

La coupelle inférieure 18 est solidaire du cylindre 10 de l'amortisseur hydraulique 4. Conformément à l'invention, cette coupelle inférieure 18, qui entoure le cylindre 10, est prolongée par un bras latéral 22 à l'extrémité duquel est fixé, par tout moyen approprié tel que soudure ou moletage, un boîtier de rotule 24 (Fig. 2 et 3). Dans le boîtier 24 est engagée la tête d'un pivot de rotule 26 dont la queue 27 est rendue solidaire d'une biellette de direction 28 associée à une commande de direction non représentée.

De préférence, le centre de la rotule 26 est situé dans le plan moyen de la coupelle 18 pour ne pas faire travailler cette dernière en torsion.

Comme le montre la figure 3, la coupelle 18 comporte une partie large arrondie autour du cylindre 10 pour recevoir l'extrémité du ressort 14, tandis qu'elle se rétrécit progressivement vers l'extrérieur en direction du boîtier de rotule 24. En outre, la partie large de cette coupelle 18 comporte un bossage en saillie 30 qui est coaxial au cylindre 10 et fait saillie vers le haut de façon à former une surface d'appui 31 pour la butée de talonnage 19 fixée sous la coupelle supérieure 16.

Comme le montre la figure 2, le bossage 30 est creux et la coupelle 18 est rendue solidaire du cylindre 10 à l'extrémité supérieure interne de ce bossage 30, ainsi que par l'intermédiaire d'un support conique 32 fixé à sa partie inférieure sur ce cylindre 10 et s'évasant vers le haut pour supporter la coupelle 18.

La coupelle 18 présente ainsi une résistance suffisante pour à la fois transmettre les mouvements de la biellette 28 au cylindre 10 et, par suite, à la fusée 2 et résister aux efforts du ressort 14, tout en ayant un poids faible et en présentant un encombrement limité par rapport aux dispositifs antérieurs. Le prix de revient de l'ensemble est par suite réduit.

## Revendications

1. Train avant de véhicule automobile comportant, pour chaque roue (3), une fusée (2) solidaire d'un cylindre d'amortisseur hydraulique (10) dont la tige de piston (12) est reliée à son extrémité supérieure à la carrosserie (1), un ressort hélicoïdal (14) disposé autour de l'amortisseur (10) entre une coupelle supérieure (16) reliée à la carrosserie (1) et une coupelle inférieure (18) solidaire du cylindre d'amortisseur (10), et une biellete de commande de direction (28) reliée au cylindre d'amortisseur (10) par une articulation à rotule (24, 26) caractérisé en ce que l'articulation à rotule (24, 26) est portée par la coupelle inférieure (18) du ressort (14), qui est solidaire du cylindre d'amortisseur (10).

2. Train avant suivant la revendication 1, caractérisé en ce que la coupelle inférieure (18) est prolongée latéralement en forme de levier (22) et porte à son extrémité extérieure un boîtier de rotule (24).

3. Train avant suivant la revendication 2, caractérisé en ce que le centre du boîtier de rotule (24) est situé dans le plan moyen de la coupelle (18).

4. Train avant suivant l'une des revendications 1 et 2, caractérisé en ce que la coupelle inférieure (18) comporte un bossage creux (30) coaxial au cylindre d'amortisseur (10) et formant à sa partie supérieure une surface d'appui (31) pour une butée de talonnage (19) fixée dans la coupelle supérieure (16).

5. Train avant suivant la revendication 4, caractérisé en ce que le bossage coaxial (30) de la coupelle est creux et fixé à sa partie supérieure interne sur le cylindre d'amortisseur (10).

6. Train avant suivant l'une des revendications 1 à 5, caractérisé en ce que la coupelle inférieure (18) est rendue solidaire du cylindre (10) par l'intermédiaire d'un support évasé (32).

## Patentansprüche

1. Vorderes Kraftfahrzeugfahrwerk, das für jedes Rad folgendes aufweist: einen Achsschenkel der mit einem hydraulischen Stoßdämpferzylinder (10) verbunden ist, dessen Kolbenstange (12) an ihrem oberen Ende mit dem Aufbau (1) verbunden ist, eine Schraubenfeder (14), die zwischen einer mit dem Aufbau (1) verbundenen oberen Schale (16) und einer mit dem Stoßdämpferzylinder (10) fest verbundenen unteren Schale (18) angeordnet ist, und einen Spurstangenhebel (28), der über ein Kugelgelenk (24, 26) mit dem Stoßdämpferzylinder (10) verbunden ist, dadurch gekennzeichnet, daß das Kugelgelenk (24, 26) von der mit dem Stoßdämpferzylinder (10) fest verbundenen unteren Schale (18) getragen wird.

2. Vorderes Fahrwerk nach Anspruch 1, dadurch gekennzeichnet, daß die untere Schale (18) seitlich als Hebel (22) verlängert ist und an ihrem äußeren Ende eine Kugelpfanne (24) trägt.

3. Vorderes Fahrwerk nach Anspruch 2, dadurch gekennzeichnet, daß die Mitte der Kugelpfanne (24) sich in der Mittelebene der Schale (18) befindet.

4. Vorderes Fahrwerk nach einem der Ansprüche 1 und 2, dadurch gekennzeichnet, daß die untere Schale (18) einen hohlen Buckel (30) aufweist, der zum Stoßdämpferzylinder (10) koaxial ist und an seinem Oberteil eine Anlagefläche (31) für einen in der oberen Schale (16) befestigten Durchfederungsanschlag (19) bildet.

5. Vorderes Fahrwerk nach Anspruch 4, dadurch gekennzeichnet, daß der koaxiale Buckel (30) der Schale hohl und an seinem inneren Oberteil am Stoßdämpferzylinder (10) befestigt ist.

6. Vorderes Fahrwerk nach einem der Ansprüche 1 bis 5, dadurch gekennzeichnet, daß die untere Schale (18) mittels eines konisch erweiterten Trägers (32) fest mit dem Zylinder (10) verbunden ist.

## Claims

1. A front set of wheels of a motor vehicle comprising, for each wheel (3), a stub-axle (2) connected to a hydraulic shock-absorber cylinder (10) whose piston rod (12) is connected at its upper end to the body (1), a coil spring (14) disposed around the shock-absorber (10) between an upper cup (16) connected to the body (1) and a lower cup (18) connected to the cylinder (10) of the shock-absorber, and a steering control link (28) connected to the shock-absorber cylinder (10) by a ball joint (24, 26), characterised in that the ball joint (24, 26) is carried by the lower cup (18) of the spring (14) which is connected to the shock-absorber cylinder (10).

2. A front set of wheels according to claim 1, characterised in that the lower cup (18) is laterally extended in the form of a lever (22) and carries at its outer end a ball socket (24).

3. A front set of wheels according to claim 2, characterised in that the centre of the ball socket (24) is contained in the mean plane of the cup (18).

4. A front set of wheels according to one of the claims 1 and 2, characterised in that the lower cup (18) includes a hollow boss (30) coaxial with the shock-absorber cylinder (10) and forming in its upper part a bearing surface (31) for a bottoming stop (19) fixed in the upper cup (16).

5. A front set of wheels according to claim 4, characterised in that the coaxial boss (30) of the cup is hollow and fixed in its inner upper part to the shock-absorber cylinder (10).

6. A front set of wheels according to one of the claims 1 to 5, characterised in that the lower cup (18) is rendered unitary with the cylinder (10) by a flared support (32).

FIG.1

FIG.2

FIG.3